# EUROPÄISCHE PATENTSCHRIFT

(11) **EP 2 746 636 B1**
(45) Veröffentlichungstag und Bekanntmachung des Hinweises auf die Patenterteilung: **04.11.2015**
(21) Anmeldenummer: 12198513.9
(22) Anmeldetag: 20.12.2012
(51) Int. Cl.: F16L 23/00, F16L 23/16, F16L 55/17

(54) **Spritzschutzband**
Splash guard tape
Bande de protection contre la projection

(43) Veröffentlichungstag der Anmeldung: 25.06.2014
(73) Patentinhaber: Angenendt, Maria Magdalena, 47802 Krefeld (DE)
(72) Erfinder: Angenendt, Maria Magdalena, 47802 Krefeld (DE)
(74) Vertreter: DR. STARK & PARTNER

(56) Entgegenhaltungen:
- EP-A1- 1 669 653
- EP-A2- 0 886 358
- DE-A1- 2 534 582
- DE-A1- 2 837 936
- DE-A1- 10 119 822
- DE-U1- 29 810 930

## Beschreibung

Die Erfindung betrifft ein Spritzschutzband für Flanschverbindungen von Rohren zur seitlichen Ablenkung von im Falle einer Leckage austretenden Medien, wobei das Spritzschutzband zwei Endbereiche aufweist und mit in das Spritzschutzband integrierten Abstandshaltern zum Außenrand der Flanschverbindung versehen ist, wobei die Abstandshalter an der der Flanschverbindung zugewandten Seite des Spritzschutzbandes in Abständen vorgesehen und insbesondere in Form von Querstegen ausgebildet sind, wobei eine Verriegelungsvorrichtung gegen ein unbeabsichtigtes Lösen des an der Flanschverbindung angebrachten Spritzschutzbandes vorgesehen ist.

Aus der Praxis sind derartige Spritzschutzbänder in verschiedenen Ausführungen bekannt.

So ist aus der DE 101 19 822 A2 ein Spritzschutzband für Flanschverbindungen von Rohren zur seitlichen Ablenkung von im Leckagefall austretenden Medien bekannt, wobei in das Band integrierte, an der dem Flansch zugewandten Seite in Abständen angebrachten Querstege als Abstandhalter zum Außenrand der Flanschverbindung, und Halterungen gegen ein Verrutschen des Spritzschutzbandes vorgesehen sind. Dabei sind die Halterungen als im Wesentlichen mittig auf den Spritzschutzbändern angeordnete und in den Zwischenraum der Flanschverbindung eingreifbare Dorne oder Zapfen ausgebildet.

Weiterhin beschreibt die EP 1 669 653 A1 einen Spritzschutz für eine Rohrverbindung, der einen flexiblen Gurt und einen Klettverschluß umfasst, wobei ein erstes Ende des Gurts an einem Gurtabschnitt befestigbar ist und der Klettverschluß einen Teil mit Haken und einen Teil mit Schlaufen aufweist. Dabei ist der Teil mit Haken auf der Außenseite des Gurtes und der Teil mit Schlaufen auf der Innenseite des Gurtes angeordnet.

Nachteilig hierbei ist, dass diese vorbekannten Spritzschutzbänder recht umständlich anzubringen sind. Insbesondere im Winter ist die Montage der häufig im Freien befindlichen Flanschverbindungen, die mit einem Spritzschutzband zu versehen sind, nur schwer möglich, da beim Tragen von Schutzhandschuhen die gebräuchlichen, beispielsweise als Schraube, Dorn oder dergleichen ausgebildeten, Verriegelungsvorrichtungen, die teilweise mit zusätzlichem Werkzeug angebracht bzw. verriegelt werden müssen, zumindest nicht gut angebracht bzw. verriegelt werden können, teilweise ist dies mit Schutzhandschuhen auch gar nicht möglich.

Aufgabe der Erfindung ist es, die vorgenannten Nachteile zu vermeiden und ein Spritzschutzband anzugeben, welches auch unter erschwerten Bedingungen einfach und ohne zusätzliches Werkzeug angebracht werden kann.

Diese Aufgabe wird gelöst durch ein Spritzschutzband gemäß Anspruch 1.

Dabei umfasst die Verriegelungsvorrichtung zum einen ein separat zum Spritzschutzband ausgebildetes Verriegelungselement und zum anderen an dem Spritzschutzband an dessen der Flanschverbindung abgewandten Seite vorgesehene, entlang der Längserstreckung des Spritzschutzbandes im Abstand zueinander verteilt angeordnete Verbindungsmittel für das Verriegelungselement, wobei das Verriegelungselement an den Verbindungsmitteln ohne Werkzeug anbringbar sowie ohne Werkzeug lösbar ist, und wobei die Verbindungsmittel als die eine Seite eines Klettverschlusses ausgebildet sind und das Verriegelungselement als die andere Seite eines Klettverschlusses ausgebildet ist und wobei die Verbindungsmittel für das Verriegelungselement einstückig mit dem Spritzschutzband ausgebildet sind.

Auf diese Weise ist eine Verriegelung in besonders einfacher und werkzeugloser Weise möglich. Die Verriegelung kann somit leicht auch beim Tragen von Schutzhandschuhen bewerkstelligt und vor allem auch sicher erzielt werden. Auch kann das Spritzschutzband einfach gelöst und leicht wiederverwendet werden.

Bei einem bevorzugten Ausführungsbeispiel der Erfindung können die Verbindungsmittel als Teilbereiche eines sich entlang der Längserstreckung des Spritzschutzbandes erstreckenden durchgehenden Bereichs ausgebildet sein. Insbesondere können die Verbindungsmittel als durchgehender, die gesamte Längserstreckung des Spritzschutzbandes umfassender Streifen der einen Seite eines Klettverschlusses sein.

Insoweit kann das Verriegelungselement als zu dem Spritzschutzband separat ausgebildetes, zwei Endbereiche aufweisendes Verriegelungsband ausgebildet sein, welches zumindest partiell um das an der Flanschverbindung angebrachte Spritzschutzband herumlegbar und wenigstens mit den jeweiligen Verbindungsmitteln an den beiden Endbereichen des Spritzschutzbandes zusammenwirkend ausgebildet ist. Damit ist eine einfache und kostengünstige Herstellung möglich und die Anbringung kann leicht und ohne Werkzeug erfolgen.

Erfindungsgemäß können die Querstege eine Höhe von 0,5 - 15 mm aufweisen, so dass ein ausreichender Abstand für einen eventuellen Austritt von aus einer defekten Flanschverbindung kommenden Mediums möglich ist.

Vorteilhafterweise kann zumindest ein Quersteg, insbesondere alle Querstege mit Halterungen versehen sein, welche ein seitliches Abrutschen von der Flanschverbindung verhindern, so dass nicht die Gefahr besteht, dass das Spritzschutzband abrutscht und dann im Leckagefall keine Spritzschutzwirkung mehr gegeben ist.

Dabei kann zumindest eine Halterung als im Wesentlichen mittig auf dem Spritzschutzband angeordneter, insbesondere mittig auf einem Quersteg angeordneter, in den Zwischenraum der Flanschverbindung eingreifender Dorn oder Zapfen ausgebildet sein.

Auch kann zumindest eine Halterung als beidseits außenseitig an dem Spritzschutzband angeordnete, insbesondere beidseits außenseitig auf einem Quersteg angeordnete, die Flanschverbindung seitlich umgreifende Vorsprünge ausgebildet sein, so dass auch bei Flanschverbindungen, bei denen kein besonders ausgeprägter Zwischenraum der Flanschverbindung gegeben ist, eine ein seitliches Abrutschen von der Flanschverbindung verhindernde Ausgestaltung möglich ist.

Erfindungsgemäß kann zumindest ein Quersteg, insbesondere alle Querstege, sich nach oben, d. h. in montiertem Zustand in Richtung der Flanschverbindung, verjüngend ausgebildet sein.

Für eine Materialeinsparung können sich zumindest einige der Querstege, insbesondere alle Querstege, nur über einen Teil der gesamten Breite des Spritzschutzbandes erstrecken.

Auch kann das Spritzschutzband als einstückig ausgebildeter Formkörper, insbesondere Kunststoffformkörper, ausgebildet sein.

Im Folgenden wird ein in den Zeichnungen dargestelltes Ausführungsbeispiel der Erfindung erläutert. Es zeigen:
- Fig. 1: eine Ansicht der Unterseite eines Abschnittes eines Ausführungsbeispiels eines erfindungsgemäßen Spritzschutzbandes,
- Fig. 2: einen Teilschnitt durch eine Flanschverbindung mit angelegtem Spritzschutzband gemäß dem Ausführungsbeispiel eines erfindungsgemäßen Spritzschutzbandes,
- Fig. 3: eine Ansicht der Oberseite eines Abschnittes des ersten Ausführungsbeispiels eines erfindungsgemäßen Spritzschutzbandes.

In allen Figuren werden für gleiche bzw. gleichartige Bauteile übereinstimmende Bezugszeichen verwendet.

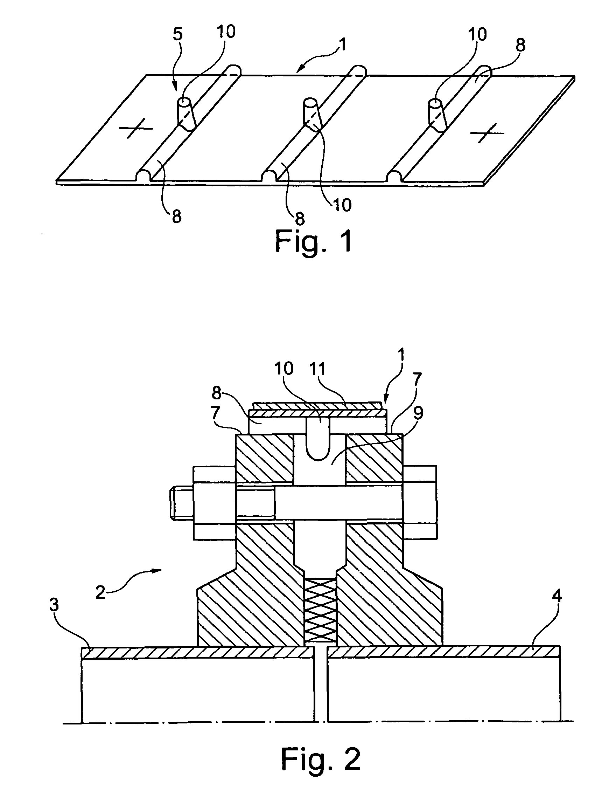

Die Figuren zeigen jeweils ein Spritzschutzband 1 für eine in den Figuren 1 und 5 nicht dargestellte Flanschverbindung 2 von Rohren 3, 4. Durch das montierte Spritzschutzband 1 erfolgt eine seitliche Ablenkung von im Falle einer Leckage austretenden Medien.

Das Spritzschutzband 1 umfasst zwei in der Zeichnung nicht dargestellte Endbereiche und ist mit in das Spritzschutzband integrierten Abstandshaltern 5 zum Außenrand 7 der Flanschverbindung 2 versehen.

Bei dem Ausführungsbeispiel des erfindungsgemäßen Spritzschutzbandes 1, wie es in den Figuren 1, 2 und 3 gezeigt ist, sind die Abstandshalter 5 an der der Flanschverbindung 2 zugewandten Seite, hier auch Unterseite des Spritzschutzbandes 1 genannt, in Abständen vorgesehen und in Form von Querstegen 8 ausgebildet.

Die Querstege 8 sind mit Halterungen versehen, die ein seitliches Abrutschen von der Flanschverbindung 2 verhindern, wobei die Halterungen als mittig auf den Querstegen 8 angeordnete, in einen Zwischenraum 9 der Flanschverbindung 2 eingreifende Dorne 10 ausgebildet sind. Damit besteht nicht die Gefahr, dass das Spritzschutzband 1 abrutscht und dann im Leckagefall keine Spritzschutzwirkung mehr gegeben ist.

Weiterhin ist eine Verriegelungsvorrichtung gegen ein unbeabsichtigtes Lösen des an der Flanschverbindung 2 angebrachten Spritzschutzbandes 1 vorgesehen, die ausschließlich durch eine Klettverbindung gebildet ist.

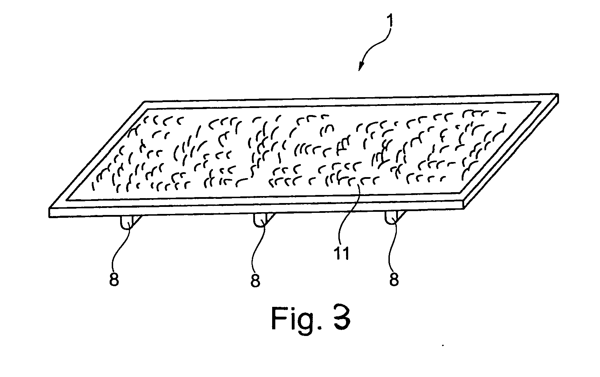

Die Verriegelungsvorrichtung umfasst dabei, wie aus den Figuren 2 und 3 ersichtlich, zum einen ein Verbindungsmittel 11, welches auf der der Flanschverbindung 2 abgewandten Seite, d. h. der Oberseite, entlang der Längserstreckung des Spritzschutzbandes 1 vorgesehen und als die eine Seite eines Klettverschlusses ausgebildet ist und zum anderen ein in der Zeichnung nicht dargestelltes und die andere Seite eines Klettverschlusses bildendes, als Verriegelungsband ausgebildetes Verriegelungselement, welches mit dem Verbindungsmittel 11 zusammenwirkt.

## Patentansprüche

1. Spritzschutzband (1) für Flanschverbindungen (2) von Rohren (3, 4) zur seitlichen Ablenkung von im Falle einer Leckage austretenden Medien, wobei das Spritzschutzband (1) zwei Endbereiche aufweist und mit in das Spritzschutzband (1) integrierten Abstandshaltern (5) zum Außenrand (7) der Flanschverbindung (2) versehen ist, wobei die Abstandshalter (5) an der der Flanschverbindung (2) zugewandten Seite des Spritzschutzbandes (1) in Abständen vorgesehen und insbesondere in Form von Querstegen (8) ausgebildet sind, wobei eine Verriegelungsvorrichtung gegen ein unbeabsichtigtes Lösen des an der Flanschverbindung (2) angebrachten Spritzschutzbandes (1) vorgesehen ist, **dadurch gekennzeichnet, dass** die Verriegelungsvorrichtung eine Klettverbindung umfasst, insbesondere ausschließlich durch diese gebildet ist, wobei die Verriegelungsvorrichtung zum einen ein separat zum Spritzschutzband (1) ausgebildetes Verriegelungselement und zum anderen an dem Spritzschutzband (1) an dessen der Flanschverbindung (2) abgewandten Seite vorgesehene, entlang der Längserstreckung des Spritzschutzbandes (1) im Abstand zueinander verteilt- angeordnete Verbindungsmittel (11) für das Verriegelungselement umfasst, wobei das Verriegelungselement an den Verbindungsmitteln (11) ohne Werkzeug anbringbar sowie ohne Werkzeug lösbar ist, wobei die Verbindungsmittel (11) als die eine Seite eines Klettverschlusses ausgebildet sind und das Verriegelungselement als die andere Seite eines Klettverschlusses ausgebildet ist und wobei die Verbindungsmittel (11) für das Verriegelungselement einstückig mit dem Spritzschutzband (1) ausgebildet sind.

2. Spritzschutzband (1) nach Anspruch 1, **dadurch gekennzeichnet, dass** die Verbindungsmittel (11) als Teilbereiche eines sich entlang der Längserstreckung des Spritzschutzbandes (1) erstreckenden durchgehenden Bereichs ausgebildet sind.

3. Spritzschutzband (1) nach einem der Ansprüche 1 oder 2, **dadurch gekennzeichnet, dass** das Verriegelungselement als zu dem Spritzschutzband (1) separat ausgebildetes, zwei Endbereiche aufweisendes Verriegelungsband ausgebildet ist, welches zumindest partiell um das an der Flanschverbindung (2) angebrachte Spritzschutzband (1) herumlegbar und wenigstens mit den jeweiligen Verbindungsmitteln (11) an den beiden Endbereichen des Spritzschutzbandes (1) zusammenwirkend ausgebildet ist.

4. Spritzschutzband (1) nach einem der vorhergehenden Ansprüche, **dadurch gekennzeichnet, dass** die Querstege (8) eine Höhe von 0,5 - 15 mm aufweisen.

5. Spritzschutzband (1) nach einem der vorhergehenden Ansprüche, **dadurch gekennzeichnet, dass** zumindest ein Quersteg (8), insbesondere alle Querstege (8) mit Halterungen versehen sind, welche ein seitliches Abrutschen von der Flanschverbindung (2) verhindern.

6. Spritzschutzband (1) nach dem vorhergehenden Anspruch, **dadurch gekennzeichnet, dass** zumindest eine Halterung als im Wesentlichen mittig auf dem Spritzschutzband (1) angeordneter, insbesondere mittig auf einem Quersteg (8) angeordneter, in einen Zwischenraum (9) der Flanschverbindung (2) eingreifender Dom (10) oder Zapfen ausgebildet ist.

7. Spritzschutzband (1) nach Anspruch 5 oder 6, **dadurch gekennzeichnet, dass** zumindest eine Halterung als beidseits außenseitig an dem Spritzschutzband (1) angeordnete, insbesondere beidseits außenseitig auf einem Quersteg (8) angeordnete, die Flanschverbindung (2) seitlich umgreifende Vorsprünge (12) ausgebildet ist.

8. Spritzschutzband (1) nach einem der vorhergehenden Ansprüche, **dadurch gekennzeichnet, dass** zumindest ein Quersteg (8), insbesondere alle Querstege (8), sich nach oben, d. h. in montiertem Zustand in Richtung der Flanschverbindung (2), verjüngend ausgebildet ist/sind.

9. Spritzschutzband (1) nach einem der vorhergehenden Ansprüche, **dadurch gekennzeichnet, dass** sich die Querstege (8) nur über einen Teil der gesamten Breite des Spritzschutzbandes (1) erstrecken.

10. Spritzschutzband (1) nach einem der vorhergehenden Ansprüche, **dadurch gekennzeichnet, dass** das Spritzschutzband (1) als einstückig ausgebildeter Formkörper, insbesondere Kunststoffformkörper, ausgebildet ist.

## Claims

1. Splash guard tape (1) for flanged connections (2) of pipes (3, 4) for the lateral deflection of media escaping in the event of a leak, with the splash guard tape (1) comprising two end regions and being provided with spacers (5) incorporated in the splash guard tape (1) from the outer edge (7) of the flanged connection (2), with the spacers (5) being provided at intervals on the side of the splash guard tape (1) facing the flanged connection (2) and being configured in particular in the form of transverse ribs (8), with a locking device being provided to prevent an inadvertent detachment of the splash guard tape (1) attached to the flanged connection (2), wherein the locking device comprises a hook-and-pile fastener, and more particularly is formed solely by the latter, with the locking device comprising on the one hand a locking element configured separately from the splash guard tape (1) and on the other hand connecting means (11) for the locking element which are provided on the side of the splash guard tape (1) facing away from the flanged connection (2) and which are arranged along the longitudinal extension of the splash guard tape (1) distributed at a distance from one another, it being possible fit the locking element to and detach it from the connecting means (11) without a tool, with the connecting means (11) being configured as one end of a hook-and-pile fastener and the locking element as the other end of a hook-and-pile fastener and with the connecting means (11) for the locking element being configured as a single piece with the splash guard tape (1).

2. The splash guard tape (1) of claim 1 wherein the connecting means (11) are configured as partial regions of a continuous region extending along the longitudinal extension of the splash guard tape (1).

3. The splash guard tape (1) of either of claims 1 or 2 wherein the locking element is configured as a locking tape which is formed separately from the splash guard tape (1) and comprises two end regions, which can be wrapped at least partially around the splash guard tape (1) fitted to the flanged connection (2) and which is configured to interact at least with the respective connecting means (11) at the two end regions of the splash guard tape (1).

4. The splash guard tape (1) of any one of the preceding claims wherein the transverse ribs (8) comprise a height of 0.5-15 mm.

5. The splash guard tape (1) of any one of the preceding claims wherein at least one transverse rib (8), in particular all transverse ribs (8), is/are provided with restraints which prevent sideways slipping off the flanged connection (2).

6. The splash guard tape (1) of the preceding claim wherein at least one restraint is configured as a pin (10) or peg arranged essentially centrally on the splash guard tape (1), and in particular arranged centrally on a transverse rib (8), engaging in a gap (9) in the flanged connection (2).

7. The splash guard tape (1) of claim 5 or 6 wherein at least one restraint is configured as projections (12) arranged on both sides outside on the splash guard tape (1), arranged in particular on both sides outside on a transverse rib (8), and laterally encompassing the flanged connection (2).

8. The splash guard tape (1) of any one of the preceding claims wherein at least one transverse rib (8), and in particular all transverse ribs (8), is/are configured such that when in the installed position they taper upward, i.e. towards the flanged connection (2).

9. The splash guard tape (1) of any one of the preceding claims wherein the transverse ribs (8) only extend over part of the full width of the splash guard tape (1).

10. The splash guard tape (1) of any one of the preceding claims wherein the splash guard tape (1) is configured as a one-piece moulding, in particular a plastic moulding.

## Revendications

1. Bande protectrice antiprojections (1), destinée à des jonctions bridées (2) de tubes (3, 4) et conçue pour dévier latéralement des fluides sortant en cas de fuite, la bande protectrice antiprojections (1) comportant deux régions extrêmes et étant pourvue d'éléments (5) intégrés dans ladite bande protectrice antiprojections (1) et assurant l'espacement vis-à-vis du bord extérieur (7) de la jonction bridée (2), lesdits éléments d'espacement (5) étant prévus à intervalles du côté de ladite bande protectrice antiprojections (1) qui est tourné vers ladite jonction bridée (2), et étant notamment réalisés sous la forme de membrures transversales (8), un dispositif de verrouillage étant prévu pour interdire une dissociation involontaire de ladite bande protectrice antiprojections (1) implantée sur ladite jonction bridée (2), **caractérisée par le fait que** le dispositif de verrouillage inclut une liaison auto-agrippante et est, en particulier, exclusivement constitué par cette dernière, ledit dispositif de verrouillage comprenant, d'une part, un élément de verrouillage réalisé distinctement de la bande protectrice antiprojections (1) et, d'autre part, des moyens de liaison (11) dévolus audit élément de verrouillage et disposés avec répartition à distance les uns des autres sur la bande protectrice antiprojections (1), le long de l'étendue longitudinale de ladite bande protectrice antiprojections (1), du côté de cette dernière qui pointe à l'opposé de la jonction bridée (2), l'élément de verrouillage pouvant être mis en place sur les moyens de liaison (11) sans aucun outil et pouvant, de même, être enlevé sans outil, les moyens de liaison (11) se présentant comme l'une des faces d'une fermeture auto-agrippante et l'élément de verrouillage se présentant comme l'autre face d'une fermeture auto-agrippante, sachant que lesdits moyens de liaison (11), dévolus audit élément de verrouillage, sont réalisés d'un seul tenant avec ladite bande protectrice antiprojections (1).

2. Bande protectrice antiprojections (1) selon la revendication 1, **caractérisée par le fait que** les moyens de liaison (11) sont réalisés en tant que zones partielles d'une région ininterrompue s'étendant le long de l'étendue longitudinale de ladite bande protectrice antiprojections (1).

3. Bande protectrice antiprojections (1) selon l'une des revendications 1 ou 2, **caractérisée par le fait que** l'élément de verrouillage revêt la forme d'un ruban de verrouillage qui est réalisé distinctement de la bande protectrice antiprojections (1), est muni de deux régions extrêmes, peut être au moins partiellement enroulé autour de ladite bande protectrice antiprojections (1) implantée sur la jonction bridée (2) et est conçu pour coopérer au moins avec les moyens de liaison (11) respectifs, dans les deux régions extrêmes de ladite bande protectrice antiprojections (1).

4. Bande protectrice antiprojections (1) selon l'une des revendications précédentes, **caractérisée par le fait que** les membrures transversales (8) présentent une hauteur de 0,5 - 15 mm.

5. Bande protectrice antiprojections (1) selon l'une des revendications précédentes, **caractérisée par le fait qu'**au moins une membrure transversale (8), en particulier toutes les membrures transversales (8), présente(nt) des supports empêchant un ripage latéral à l'écart de la jonction bridée (2).

6. Bande protectrice antiprojections (1) selon la revendication précédente, **caractérisée par le fait qu'**au moins un support est réalisé sous la forme d'un éperon (10) ou d'un tenon qui occupe, pour l'essentiel, une position centrale sur ladite bande protectrice antiprojections (1), est notamment situé au centre sur une membrure transversale (8) et pénètre dans un espace interstitiel (9) de la jonction bridée (2).

7. Bande protectrice antiprojections (1) selon la revendication 5 ou 6, **caractérisée par le fait qu'**au moins un support est réalisé sous la forme de protubérances (12) qui sont situées de part et d'autre à la face extérieure de ladite bande protectrice antiprojections (1), sont notamment disposées à l'extérieur de part et d'autre sur une membrure transversale (8), et ceinturent latéralement la jonction bridée (2).

8. Bande protectrice antiprojections (1) selon l'une des revendications précédentes, **caractérisée par le fait qu'**au moins une membrure transversale (8), en particulier toutes les membrures transversales (8), est (sont) réalisée(s) avec amenuisement vers le haut, c'est-à-dire, à l'état monté, en direction de la jonction bridée (2).

9. Bande protectrice antiprojections (1) selon l'une des revendications précédentes, **caractérisée par le fait que** les membrures transversales (8) s'étendent uniquement sur une partie de la largeur totale de ladite bande protectrice antiprojections (1).

10. Bande protectrice antiprojections (1) selon l'une des revendications précédentes, **caractérisée par le fait que** ladite bande protectrice antiprojections (1) se présente comme un corps moulé réalisé d'un seul tenant, en particulier un corps moulé en matière plastique.
